# EUROPEAN PATENT APPLICATION

(11) **EP 4 760 537 A1**
(43) Date of publication of application: **17.06.2026**
(21) Application number: 24887489.3
(22) Date of filing: 30.07.2024
(51) Int. Cl.: G06F 16/538

(54) **IMAGE DESCRIPTION METHOD AND RELATED DEVICE**

(30) Priority: 09.11.2023 CN 202311492000
(71) Applicant: TENCENT TECHNOLOGY (SHENZHEN) COMPANY LIMITED, Shenzhen, Guangdong 518057 (CN)
(72) Inventor: CAI, Junxian, Shenzhen, Guangdong 518057 (CN); HE, Junfeng, Shenzhen, Guangdong 518057 (CN); CHEN, Xi, Shenzhen, Guangdong 518057 (CN)
(74) Representative: Gunzelmann, Rainer
(86) International application number: PCT/CN2024/108314
(87) International publication number: WO 2025/097867

(57) **Abstract**

This application discloses an image description method and a related device. The method may include: obtaining a to-be-described image, an image description model, and a description prompt text; and inputting the description prompt text and the to-be-described image into the image description model, and performing image description on the to-be-described image through the image description model, to obtain a first image description text that conforms to an image description rule, the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule. Through this application, a large quantity of network resources do not need to be consumed to identify information such as candidate boxes and classifications of images, thereby avoiding a waste of network resources and saving network resources.

## Description

### RELATED APPLICATION

This application claims priority to Chinese Patent Application No. 202311492000.3, filed with the China National Intellectual Property Administration on November 9, 2023 and entitled "IMAGE DESCRIPTION METHOD AND RELATED DEVICE".

### FIELD OF THE TECHNOLOGY

This application relates to the field of computer technologies, and in particular, to an image description method and a related device.

### BACKGROUND OF THE DISCLOSURE

Image annotation is a process of marking and describing an object, an area, or a feature in an image. The image annotation is an important task in a computer in a field of vision, and is configured for adding semantic and contextual information to image data, so that the computer can understand and process image content.

When an image needs to be annotated or described, information such as a candidate box and a classification of the image is identified through an image annotation tool, for example, an open-source tool such as Labelimg or ImgLab, and then description information related to the candidate box and the classification is obtained.

However, when many images that need to be described and annotated exist, a large quantity of network resources need to be consumed through the foregoing tool to identify the information such as the candidate box and the classification of the image and then obtain related description information, which easily causes a waste of the network resources.

### SUMMARY

Embodiments of this application provide an image description method and a related device. The related device may include an image description apparatus, an electronic device, a computer-readable storage medium, and a computer program product. A large quantity of network resources do not need to be consumed to identify information such as candidate boxes and classifications of images, thereby avoiding a waste of network resources and saving network resources.

An embodiment of this application provides an image description method, including:
obtaining an input image;
obtaining an image description model and a description prompt text, the description prompt text being configured for providing an image description rule for performing image description by the image description model;
inputting the description prompt text and the input image into the image description model, and performing image description on the input image based on the description prompt text through the image description model, to obtain a first image description text that conforms to the image description rule,
the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule.

In some embodiments, before the obtaining a description prompt text, the method further includes:
performing initialization based on a preset image description rule, to obtain an initial prompt text;
inputting the initial prompt text and the sample image into the image description model, and performing image description on the sample image based on the initial prompt text through the image description model, to obtain a predicted image description text;
obtaining a sample image description text based on the image description rule and the sample image;
obtaining a first text difference based on the sample image description text and the predicted image description text; and
correcting the initial prompt text based on the first text difference, to obtain a description prompt text.

In some embodiments, after the first image description text is obtained, the method further includes:
displaying a description text adjustment interface, the description text adjustment interface including an image text display area and a text adjustment area, the image text display area being configured for displaying the first image description text;
adjusting the first image description text in the text adjustment area in response to a modification operation on a description text, to obtain a second image description text; and
updating the second image description text to the image text display area to replace the first image description text.

In some embodiments, after the updating the second image description text to the image text display area to replace the first image description text, the method further includes:
adding the second image description text to the sample image description text, to update the sample image description text.

In some embodiments, before the updating the second image description text to the image text display area to replace the first image description text, the method further includes:
obtaining a comparison text of the first image description text and the second image description text; and
performing the operation of updating the second image description text to the image text display area to replace the first image description text if the comparison text meets a preset text modification completion condition.

In some embodiments, before the inputting the description prompt text and the input image into the image description model, and performing image description on the input image based on the description prompt text through the image description model, to obtain a first image description text that conforms to the image description rule, the method further includes:
obtaining an instruction prompt text based on the sample image description text, the instruction prompt text including an image description instruction and a sample description text corresponding to the image description instruction;
guiding, based on the image description instruction, the image description model to perform image description on a sample image, to obtain a predicted description text;
obtaining a second text difference based on the predicted description text and the sample description text;
performing parameter optimization and iteration on the image description model based on the second text difference and the instruction prompt text, until the second text difference meets a preset convergence condition; and
performing, if the second text difference meets the preset convergence condition, the operation of inputting the description prompt text into the image description model, and performing image description on the input image through the image description model, to obtain a first image description text that conforms to the image description rule.

In some embodiments, the input image includes at least two input images, and the inputting the description prompt text and the input image into the image description model, and performing image description on the input image based on the description prompt text through the image description model, to obtain a first image description text that conforms to the image description rule includes:
performing feature extraction on the at least two input images through the image description model, to obtain image labels of the at least two input images;
inputting the description prompt text into the image description model, and obtaining a screening label based on the image description rule;
screening the at least two input images based on the screening label and the image labels, to obtain an input image associated with the image description rule, and a target image; and
performing image description on the target image through the image description model, to obtain the first image description text that conforms to the image description rule.

In some embodiments, the target image includes at least two target images, and the performing image description on the target image through the image description model, to obtain the first image description text that conforms to the image description rule includes:
obtaining image labels of the at least two target images;
dividing the at least two target images based on the image labels, to obtain target images with the same label; and
performing image description on the target images with the same label through the image description model, to obtain the first image description text that conforms to the image description rule.

In some embodiments, the performing image description on the target images with the same label through the image description model, to obtain the first image description text that conforms to the image description rule includes:
obtaining text labels of a plurality of description prompt texts;
determining, from the text labels of the plurality of description prompt texts, a text label that matches an image label corresponding to the target image, to obtain a target label;
obtaining a description prompt text corresponding to the target label from the plurality of description prompt texts, to obtain a target prompt text; and
performing image description on the target images with the same label through the image description model, to obtain the first image description text that conforms to the image description rule corresponding to the target prompt text.

In some embodiments, the same target label corresponds to at least two description prompt texts, and the obtaining a description prompt text corresponding to the target label, to obtain a target prompt text includes:
obtaining a text call rate of the plurality of description prompt texts corresponding to the target label within a preset time period; and
using, as the target prompt text, the description prompt text having maximum text call rate.

In some embodiments, the same target label corresponds to at least two description prompt texts, and the obtaining a description prompt text corresponding to the target label, to obtain a target prompt text further includes:
determining whether the image labels of the at least two target images include any prohibited label;
obtaining, if the prohibited label exists, target labels corresponding to the image labels including the prohibited label, to obtain target screening labels;
obtaining description prompt texts corresponding to the target screening labels, to obtain screening prompt texts; and
obtaining, based on the screening prompt texts, a description prompt text remaining in the at least two description prompt texts corresponding to the target labels, to obtain the target prompt text.

Correspondingly, an embodiment of this application provides an image description apparatus, including:
an image obtaining module, configured to obtain an input image;
a model text obtaining module, configured to obtain an image description model and a description prompt text, the description prompt text being configured for providing an image description rule for performing image description by the image description model;
a description text obtaining module, configured to input the description prompt text into the image description model, and perform image description on the input image through the image description model, to obtain a first description text that conforms to the image description rule,
the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule.

An embodiment of this application provides an electronic device, including a processor and a memory, the memory having a plurality of instructions stored therein, and the processor loading the instructions to perform operations in the image description method provided in the embodiment of this application.

An embodiment of this application further provides a computer-readable storage medium, having a computer program stored therein, and the computer program, when executed by a processor, implementing operations in the image description method provided in the embodiment of this application.

In addition, an embodiment of this application further provides a computer program product, including a computer program or instruction, the computer program or instruction, when executed by a processor, implementing operations in the image description method provided in the embodiment of this application.

An embodiment of this application provides an image description method and a related device. The method may include: obtaining an input image; obtaining an image description model and a description prompt text, the description prompt text being configured for providing an image description rule for performing image description by the image description model; and inputting the description prompt text and the input image into the image description model, and performing image description on the input image based on the description prompt text through the image description model, to obtain a first image description text that conforms to an image description rule, the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule. In this application, the description prompt text that meets the description requirement is obtained through the sample image description text and the predicted image description text, and then the image description model may generate, based on the description prompt text, the first image description text that conforms to the image description rule without consuming network resources to identify information such as a candidate box and a classification of the image, and the first image description text can be directly generated, thereby avoiding a waste of the network resources and saving the network resources. In addition, the first image description text of the input image that conforms to the image description rule can be rapidly generated by using the description prompt text through the image description model. Then, the input image may be annotated through the first image description text, which can reduce complexity in an image annotating process, thereby improving image annotating efficiency.

### BRIEF DESCRIPTION OF THE DRAWINGS

To describe technical solutions of embodiments of this application more clearly, drawings required for describing the embodiments are briefly described below. Apparently, the drawings in the following description show only some embodiments of this application, and a person skilled in the art may derive other drawings from the drawings without creative efforts.
FIG. 1 is a schematic diagram of a scenario of an image description method according to an embodiment of this application.
FIG. 2a is a flowchart of an image description method according to an embodiment of this application.
FIG. 2b is a schematic diagram of an image description rule according to an embodiment of this application.
FIG. 2c is another schematic diagram of an image description rule according to an embodiment of this application.
FIG. 3 is a schematic flowchart of iteration of an image description model according to an embodiment of this application.
FIG. 4 is a schematic diagram of a description text adjustment interface according to an embodiment of this application.
FIG. 5 is a schematic flowchart of iteration of an image description model according to an embodiment of this application.
FIG. 6 is a schematic diagram of a comparison of efficiency between manual image description and image description through an image description model according to an embodiment of this application.
FIG. 7 is another flowchart of an image description method according to an embodiment of this application.
FIG. 8 is a schematic data flowchart of image description according to an embodiment of this application.
FIG. 9 is a schematic diagram of establishing an image description model according to an embodiment of this application.
FIG. 10 is a schematic structural diagram of an image description apparatus according to an embodiment of this application.

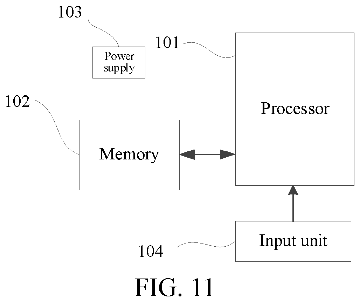

FIG. 11 is a schematic structural diagram of an electronic device according to an embodiment of this application.

### DESCRIPTION OF EMBODIMENTS

Technical solutions in embodiments of this application are clearly and completely described below with reference to accompanying drawings in all embodiments of this application. Apparently, the described embodiments are merely some rather than all of the embodiments of this application. All other embodiments obtained by a person skilled in the art based on all embodiments of this application without creative efforts fall within the protection scope of this application.

The embodiments of this application provide an image description method and a related device. The related device may include an image description apparatus, an electronic device, a computer-readable storage medium, and a computer program product. The image description apparatus may specifically be integrated in the electronic device. The electronic device may be a device such as a terminal or a server.

The image description method in all embodiments may be performed by the terminal, or may be performed by the server, or may be jointly performed by the terminal and the server. The foregoing examples are not to be construed as a limitation on this application.

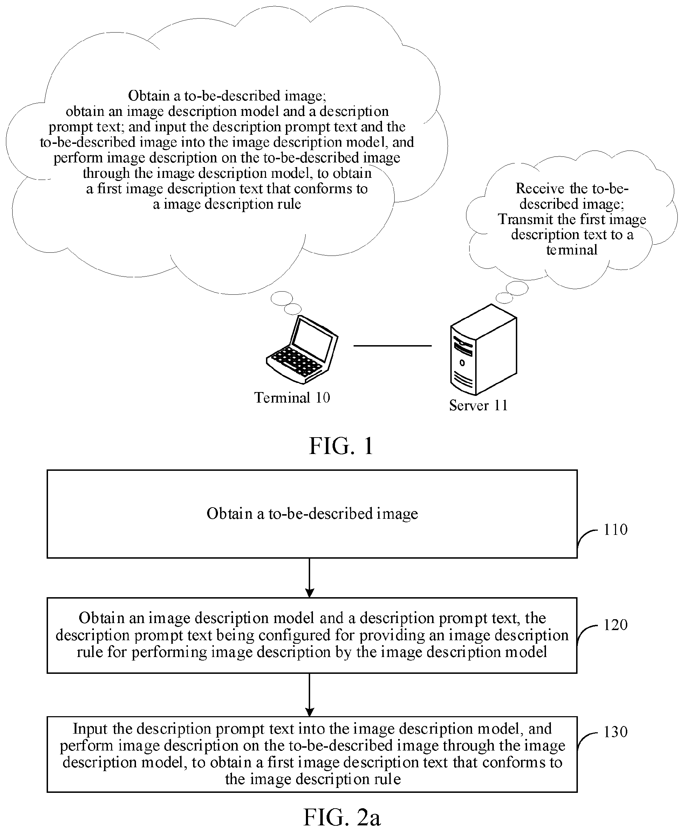

As shown in FIG. 1, an example in which the image description method is jointly performed by the terminal and the server is used. A model training system provided in an embodiment of this application includes a terminal 10, a server 11, and the like. The terminal 10 and the server 11 are connected through a network, for example, through a wired or wireless network, and the image description apparatus may be integrated in the terminal.

The terminal 10 may be configured to: obtain an input image; obtain an image description model and a description prompt text, the description prompt text being configured for providing an image description rule for the image description model to perform image description; and input the description prompt text and the input image into the image description model, and perform image description on the input image through the image description model, to obtain a first image description text that conforms to an image description rule, the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule.

The terminal 10 may include a mobile phone, a smart voice interaction device, a smart home appliance, an onboard terminal, an aircraft, a tablet computer, a laptop, a personal computer (PC), or the like. The terminal 10 may be further provided with a client. The client may be an application client, a browser client, or the like.

The server 11 may be configured to: receive an input image transmitted by the terminal 10, and obtain an image description model and a description prompt text, the description prompt text being configured for providing an image description rule for the image description model to perform image description; and finally input the description prompt text and the input image into the image description model, and perform image description on the input image through the image description model, to obtain a first image description text that conforms to the image description rule, and transmit the first image description text to the terminal 10. The description prompt text is obtained by correcting an initial prompt text corresponding to the image description rule based on a first text difference between a sample image description text and a predicted image description text, the sample image description text is obtained based on a sample image and the image description rule, the predicted image description text is obtained by the image description model performing image description on the sample image, and the initial prompt text is initialized based on the image description rule.

The server 11 may be an independent physical server, a server cluster formed by a plurality of physical servers, a distributed system, or a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. In the image description method or apparatus disclosed in this application, a plurality of servers may be grouped into a blockchain, and the servers are nodes on the blockchain.

Detailed descriptions are separately provided below. A description order of the following embodiments is not construed as a limitation on a preferred order of the embodiments.

An LLM is an abbreviation for a large language model. The large language model can simultaneously process a plurality of different media data, such as text, images, audio, and videos. Different media data is mixed to understand and generate related content more accurately.

This embodiment is described from a perspective of the image description apparatus. The image description apparatus may specifically be integrated in the electronic device. The electronic device may be a device such as the server or the terminal.

This embodiment is applicable to various scenarios such as a cloud technology, artificial intelligence, intelligent traffic, and assisted driving.

As shown in FIG. 2a, a specific process of the image description method may be as follows.

110: Obtain an input image.

In this embodiment, an execution body may be a terminal, or may be a server. Preferably, the execution body is the server. A manner of obtaining the input image may be that the input image is obtained by another terminal device to the image description system in a wired and/or wireless manner, or certainly, several images may be prestored in the image description system. A manner of setting a time for an image enables the system to automatically extract the corresponding input image when the set time arrives. Certainly, the manner may alternatively be another manner, which is not limited in this embodiment. The input image includes an image on which image description needs to be performed. The image description system is a hardware device system for image description. For example, the image description system may be an electronic device, the electronic device may be a server, or a terminal, and the image description system may also be a system in which a server interacts with a terminal.

120: Obtain an image description model and a description prompt text, the description prompt text being configured for providing an image description rule for performing image description by the image description model.

The description prompt text is obtained by correcting an initial prompt text corresponding to the image description rule based on a first text difference between a sample image description text and a predicted image description text, the sample image description text is obtained based on a sample image and the image description rule, the predicted image description text is obtained by the image description model performing image description on the sample image, and the initial prompt text is initialized based on the image description rule. The image description rule is a condition that needs to be complied with when the image description text is generated, which may be preset or empirically derived through testing. The image description rule may include a boundary condition for generating the image description text, a reference condition for generating the image description text, or the like. For example, when image classification and description are performed, the image description rule may include a reference condition of an image category, a representation condition of an image category, or the like. For example, when a two-dimensional code image is classified and identified, the image description rule may be "a two-dimensional code appears in an image". For example, when image content is described, the image description rule may define a condition that needs to be complied with when generating a subject description text and a condition that needs to be complied with when generating a non-subject content description text. For example, when the image content is described, the image description rule may include "content with distinct characteristics among attributes, including facial features, expressions, hair, decorative accessories, clothing, shoes, socks, hats, postures, movements, makeup, and the like needs to be described in the subject content" and "content is simply summarized when no distinct features exist in the non-subject content". In some embodiments, the image description rule may further include a preset text format, a language format, and the like that need to be complied with when generating the image description text. The language format refers to a composition manner of each part in the text, and the text format refers to a specification or a standard of the text content, for example, a pure text format.

After the input image is obtained, a corresponding image description model may be determined based on the input image. For example, different input images are classified before being obtained. Some of the input images are classification tasks, and some of the input images are detection tasks. Certainly, more task types such as image descriptions may exist. The system may select algorithms of different image description models based on task types of different images, to determine corresponding image description models. The image description model is configured to generate, based on an input image and the description prompt text, text describing content in the input image. The image description model may be a multi-modal language model. The multi-modal language model completes various multi-modal tasks through information in a plurality of modalities. The information in the plurality of modalities may be information in at least two modalities. The modality information includes, but is not limited to, text information, image information, video information, audio information, or the like. The sample image and the input image are usually images of the same task type, namely, an image description rule of the sample image is the same as that of the input image.

When the image description model is obtained, the description prompt text is further obtained. The description prompt text may be a question, a sentence, or a complete dialog context. The description prompt text can provide the image description rule for the image description model, so that the image description model can generate, based on the description prompt text, description text for the input image according to the image description rule.

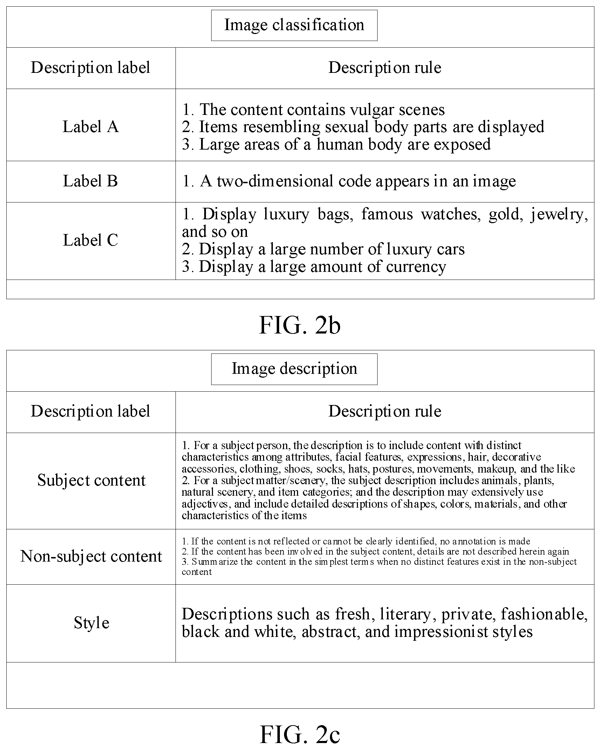

FIG. 2b is a schematic diagram of an image description rule according to an embodiment of this application. In a case that an input image generates a description text based on a rule in FIG. 2b, when content identified by the image description model for the image satisfies the description rule in FIG. 2b, the corresponding input image is described as a description label corresponding to the corresponding description rule. The description label is image description text of the input image. In other words, a task type of the input image is an image classification.

FIG. 2c is another schematic diagram of an image description rule according to an embodiment of this application. When an input image generates a description text based on a rule in FIG. 2c, the image description model identifies the image, for example, obtains content of the input image through operations such as image feature extraction and image fusion, and generates a segment of description text based on the description rule of FIG. 2c. In other words, a type of the to-be-described task is an image description.

Certainly, FIG. 2b and FIG. 2c are merely two examples listed in all embodiments of this application. In an actual application, more image description rules may exist, and this application is not limited to the foregoing two examples.

Further, in some embodiments, before the identification and description of the image is performed, multi-modal large language model (MLLM) prompt iteration needs to be performed on the image description model, so as to obtain the process of the description prompt text. In other words, before the description prompt text is obtained, the method further includes:
performing initialization based on a preset image description rule, to obtain an initial prompt text;
inputting the initial prompt text and the sample image into the image description model, and performing image description on the sample image based on the initial prompt text through the image description model, to obtain a predicted image description text;
obtaining a sample image description text based on the image description rule and the sample image;
obtaining a first text difference based on the sample image description text and the predicted image description text; and
correcting the initial prompt text based on the first text difference, to obtain a description prompt text.

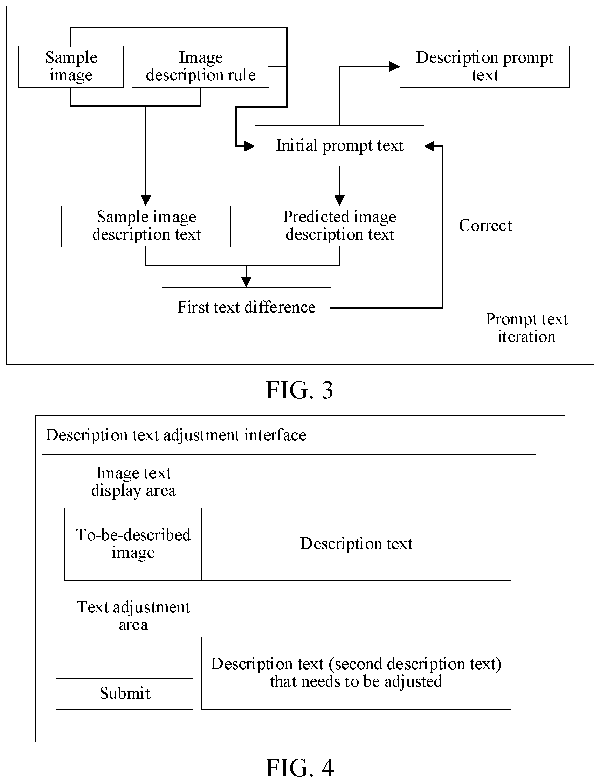

FIG. 3 is a schematic flowchart of iteration of an image description model according to an embodiment of this application. Before a description prompt text is obtained, the description prompt text of the sample image is initialized based on a preset image description rule, to obtain an initial prompt text. The preset image description rule may be the rules exemplified in FIG. 2b and FIG. 2c, or certainly may be another rule. The preset image description rule may be a rule transmitted to a system through another device, or may be a rule generated by the system based on setting. In other words, the initial prompt text is an initial description prompt text generated based on the image description rule. The initial prompt text includes information about the image description rule. The image description model may extract the information about the image description rule from the initial prompt text and perform image description.

A process of initializing the description prompt text may be a prompt text of an input image generated by the system based on the image description rule, or may be a prompt text of an input image inputted into the system through another terminal device. In other words, an initial prompt text implicitly includes a corresponding image description rule, and the image description model may generate a description text corresponding to the input image based on the initial prompt text. The initial prompt text is a description prompt text having a relatively large error. The description text generated based on the initial prompt text may have a relatively large image description error.

After the initial prompt text is obtained, the initial prompt text and the sample image are inputted into the image description model. Image description is performed on the sample image based on the initial prompt text through the image description model, to obtain a predicted image description text. The sample image may be selected based on an actual situation, may be transmitted to the system by another terminal device, or may be extracted from a preset storage space in the system. After the sample image is obtained, the image description model may perform image description on the sample image based on the initial prompt text and the image description rule corresponding to the initial prompt text, to obtain the predicted image description text. The predicted image description text may include the sample image and the predicted description text corresponding to the sample image.

While obtaining the predicted image description text, a sample image description text (namely, Gold Labels data) may further be obtained. The sample image description text is obtained based on the image description rule and the sample image. For example, the description text of the sample image may be generated based on the image description rule, or the description text of the sample image may be directly obtained. The description text may be preset based on the image description rule, or may be that accurate sample image description text generated based on the image description text of the sample image is prestored in the system, and then may be directly read by the image description system, or certainly may be transmitted and obtained by another terminal device. The sample image description text may be generated by another terminal device and obtained after manual correction, or may be obtained by manual direct input.

Then, a first text difference is obtained based on the sample image description text and the predicted image description text. An obtaining manner may be comparing the sample image description text with the predicted image description text, then determining a difference point between the sample image description text and the predicted image description text, namely, the first text, and then correcting the initial prompt text according to the first text in a manner of automatic modification by a system or in a manner of input by another terminal device, so that a question, a sentence, or a complete dialogue context in the initial prompt text is more perfect, and a finally obtained difference rate between the predicted image description text and the sample image description text is less than a preset value. Therefore, the corrected initial prompt text obtained is the description prompt text (namely, prompt).

In other words, after the input image is obtained, the image description model may generate an image description text that meets a requirement based on the description prompt text, thereby improving accuracy of image description text generation.

130: Input the description prompt text and the input image into the image description model, and perform image description on the input image based on the description prompt text through the image description model, to obtain a first image description text that conforms to the image description rule.

After the description prompt text is obtained, the description prompt text and the input image are inputted to the image description model, and then the image description model performs image description on the input image based on the description prompt text, so as to obtain the first image description text that conforms to the image description rule. For example, for a task of image description, the first image description text may be generated based on the description rule of FIG. 2c. The first image description text refers to a text configured for describing content in the input image based on the image description rule, and may include the input image and the corresponding first description text. For example, the first description text may be "a man and a woman sit facing each other on the steps at night. The woman wears hair accessories with a white garment featuring blue sleeves, while the man sports a high ponytail, blue clothing, a black-gray vest, and grips a short sword. The scene is set outside towering steps of an ancient architectural structure", or "an elderly man glares furiously at a woman. The man, with disheveled silver-streaked hair, is draped in a dragon-embroidered imperial robe and collapses slumped on the floor, his face contorted with disbelief and rage. The woman, clad in cerulean robes and crowned with a phoenix-adorned headdress, stands facing him with her back turned to the viewer. The scene is set in a bedchamber of an emperor and is adjacent to the royal dais", or the like.

After the first image description text is obtained, the input image may be annotated. It may be learned from the above that the description prompt text that meets the description requirement is obtained through the sample image description text and the predicted image description text, and then the image description model may generate, based on the description prompt text, the first image description text that conforms to the image description rule without consuming network resources to identify information such as a candidate box and a classification of the image, and the first image description text can be directly generated, thereby avoiding a waste of the network resources and saving the network resources. In addition, the first image description text of the input image that conforms to the image description rule can be rapidly generated by using the description prompt text through the image description model. Then, the input image may be annotated through the first image description text, which can reduce complexity in an image annotating process, thereby improving image annotating efficiency.

Further, in some embodiments, FIG. 4 is a schematic diagram of a description text adjustment interface according to an embodiment of this application. To further improve image description accuracy, after a first image description text is obtained, the first image description text may continue to be adjusted. Therefore, after the first image description text is obtained, the method further includes:
displaying a description text adjustment interface, the description text adjustment interface including an image text display area and a text adjustment area, the image text display area being configured for displaying the first image description text;
adjusting the first image description text in the text adjustment area in response to a modification operation on a description text, to obtain a second image description text; and
updating the second image description text to the image text display area to replace the first image description text.

In this embodiment, an execution body may be a terminal, or may be a server. Preferably, the execution body is the terminal. After the first image description text is obtained, the first image description text is displayed on the description text adjustment interface. In other words, the input image and the first description text in the first image description text are displayed in the image text display area.

When the first image description text needs to be adjusted, namely, when the first description text needs to be adjusted, in response to a modification operation on the description text, the first image description text is adjusted in the text adjustment area, to obtain the second image description text. In other words, the description text after the first description text is modified, namely, the second description text, is entered in the text adjustment area, and then the first description text is replaced with the second description text.

A specific replacement manner may be selecting a submission button in the text adjustment area, so as to submit the second description text to the description text adjustment interface. In this case, content displayed in the image text display area is the input image and the second description text. In other words, the second image description text includes the input image and the second description text. The second description text can modify the content in the first description text more accurately, so that the obtained text can better conform to the image description rule.

When the second description text replaces the first description text, the second image description text is updated to the image text display area to replace the first image description text, so that more accurate image description text can be obtained, and annotated content can be more accurate when the input image is annotated.

Further, in some embodiments, after the updating the second image description text to the image text display area to replace the first image description text, the method further includes:
adding the second image description text to the sample image description text, to update the sample image description text.

Because a quantity of the sample image description texts obtained in the foregoing solution may be relatively small, and the obtained first image description text has relatively low accuracy, a plurality of first image description texts obtained need to be corrected. Therefore, to improve accuracy of describing the image by the image description model, in this case, the server may add the second image description text to the sample image description text, to update the sample image description text. In other words, the second image description text may be used as the sample image description text, namely, comparison adjustment may be performed on the predicted image description text based on more sample image description texts, so that more accurate description prompt text can be obtained. That is to say, a modification rate of the image description text generated through the image description model can be reduced, and accuracy of the generated image description text can be improved.

Further, in some embodiments, before the updating the second image description text to the image text display area to replace the first image description text, the method further includes:
obtaining a comparison text of the first image description text and the second image description text; and
performing the operation of updating the second image description text to the image text display area to replace the first image description text if the comparison text meets a preset text modification requirement.

Specifically, the description text adjustment interface may further include a comparison area. Certainly, the comparison area may be a separate interface. Before the second description text is obtained to replace the first description text, the input image and the first description text and the second description text that correspond to the input image are displayed in the comparison area, and different points are displayed in the two texts. The different points may be displayed in a manner of underscoring, or may be displayed in fonts of different colors, or certainly may be displayed in another manner. The first description text and the second description text displayed with the different points are comparison texts of the first image description text and the second image description text.

Through the comparison texts, a related person may find the difference between the first image description text and the second image description text, may determine whether the first image description text is modified by the second image description text, and may find whether the modified text meets a preset text modification completion condition. The preset text modification completion condition refers to a condition when the modification of the first image description text is completed, and may include, but is not limited to, that the modified text, namely, the second description text meets the image description rule, that the second description text meets a word count requirement, and the like.

If the preset text modification completion condition is met, and it is proved that the second description text meets the requirement of the image description rule, modification on the first image description text is completed. In this case, the operation of updating the second image description text to the image text display area to replace the first image description text is performed, so that accuracy of the obtained image description text can be ensured as much as possible.

If the preset text modification completion condition is not met, the first image description text may continue to be modified in the text adjustment area until the obtained second image description text meets the preset text modification completion condition. The preset text modification completion condition may be set based on an actual situation, for example, whether a word count requirement is satisfied, or whether a paragraph requirement is satisfied.

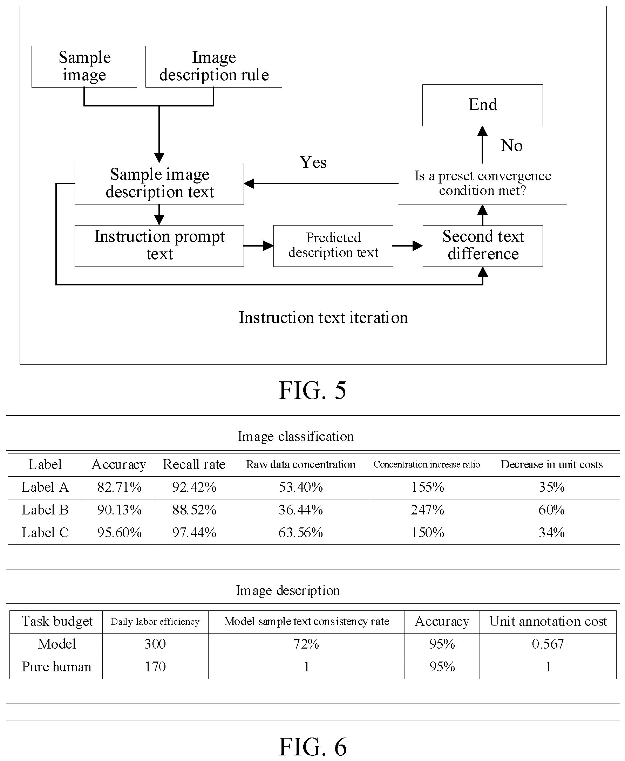

Further, in some embodiments, to further improve accuracy of generating the image description text by the image description model, FIG. 5 is another schematic flowchart of iteration of an image description model according to an embodiment of this application. Before the inputting the description prompt text and the input image into the image description model, and performing image description on the input image based on the description prompt text through the image description model, to obtain a first image description text that conforms to the image description rule, the method further includes:
obtaining an instruction prompt text based on the sample image description text, the instruction prompt text including an image description instruction and a sample description text corresponding to the image description instruction;
guiding, based on the image description instruction, the image description model to perform image description on a sample image, to obtain a predicted description text;
obtaining a second text difference based on the predicted description text and the sample description text;
performing parameter optimization and iteration on the image description model based on the second text difference and the instruction prompt text, until the second text difference meets a preset convergence condition; and
performing, if the second text difference meets the preset convergence condition, the operation of inputting the description prompt text into the image description model, and performing image description on the input image through the image description model, to obtain a first image description text that conforms to the image description rule.

In other words, before the first image description text is obtained, the image description model is iteratively trained. First, an instruction prompt text is obtained based on the sample image description text. That is to say, Instruct Prompt data (instruction prompt text) is constructed through Gold Labels data. The instruction prompt text includes an image description instruction and a sample description text corresponding to the image description instruction. The image description instruction is an instruction instructing the image description model to perform image description. The sample description text may be a text in the sample image description text. The instruction prompt text may be constructed in the following manner.

Defining a task: A task or a problem that needs to be resolved is clarified, for example, image classification or image description.

Determining Gold Labels: Gold Labels are obtained through accurate and trusted labels or answers provided by manual annotation or experts. The Gold Labels are real standards or reference answers of tasks.

Design instruction (Instruct): A set of instructions (Instruct) are designed based on a requirement of a task and a feature of a sample, to instruct a model to generate a correct answer. The instruction is clear, concise, and easy to understand, and can guide the model to complete the task correctly.

Constructing a sample: The Gold Labels are paired with the corresponding input samples, to form a training sample. Each training sample includes an input text and corresponding Gold Labels, namely, includes an image description instruction and a sample description text. Different sample structures may be designed based on different tasks.

Expanded samples: Based on a requirement, a data set may be expanded by increasing diversity of samples. Different input variants may be used, noise is introduced, or an input is modified, to increase richness of a data set.

Dividing data: The constructed Instruct Prompt data set is divided into a training set, a verification set, and a test set. The training set is configured for training a model, the validation set is configured for adjusting a hyper-parameter and evaluating performance of the model, and the test set is configured for finally evaluating generalization capability of the model.

After the instruction prompt sample is obtained, the image description model may be guided through the image description instruction to perform image description on the sample image, to obtain the predicted description text, and then a second text difference is obtained based on the predicted description text and the sample description text. The second text difference may be obtained after the image description model performs analysis, and then parameter optimization and iteration are performed on the image description model based on the second text difference and the instruction prompt text, until the second text difference satisfies the preset convergence condition.

A manner of obtaining the second text difference may be defined through a loss function, for example, through a cross entropy loss or a mean square error. Then, parameter optimization may be performed through a gradient descent algorithm or a variant thereof. During parameter optimization, the hyper-parameter of the model is optimized. The hyper-parameter includes a learning rate, a batch size, a regularization parameter, and the like. The effect of different hyper-parameter settings may be evaluated through cross validation or a validation set, and an optimal hyper-parameter combination is selected. Certainly, the foregoing is merely an example. In an actual application, different algorithms may be selected based on different needs to perform parameter optimization and iteration.

That the second text difference meets the preset convergence condition may be that a difference rate of the second text difference is less than a preset difference rate, or that a quantity of times of iterative optimization meets a preset quantity of times. Further, after the sample description image is updated through the second image description text, the instruction prompt text may still be obtained through an updated sample description image, so that the foregoing iteration can be continuously repeated until the second text difference meets the preset convergence condition, namely, the accuracy of the generated predicted description text reaches the preset accuracy.

When the second text difference meets the preset convergence condition, the operation of inputting the description prompt text into the image description model and performing image description on the input image through the image description model, to obtain a first image description text that conforms to the image description rule. Therefore, in the foregoing method, the image description model can be further trained, so that the accuracy of generating the image description text by the image description model is improved, and operating efficiency in the image annotation process is improved.

Further, in some embodiments, the input image includes at least two input images, and the inputting the description prompt text and the input image into the image description model, and performing image description on the input image based on the description prompt text through the image description model, to obtain a first image description text that conforms to the image description rule includes:
performing feature extraction on the at least two input images through the image description model, to obtain image labels of the at least two input images;
inputting the description prompt text into the image description model, and obtaining a screening label based on the image description rule;
screening the at least two input images based on the screening label and the image label, to obtain an input image associated with the image description rule and a target image; and
performing image description on the target image through the image description model, to obtain the first image description text that conforms to the image description rule.

Because many input images exist, and types of the images are also different, before image description is performed on a plurality of input images, the images further need to be screened and classified, so as to screen input images that do not conform to the image description rule. For example, the image description rule is an image animal classification description rule. When the plurality of input images include images that do not include an animal, the images that do not include an animal need to be screened out.

Feature extraction may be performed on the input image through the image description model, to obtain an image label. For example, the image description model may use a convolutional neural network to extract representative feature vectors from the input image. These feature vectors may capture information such as a shape, texture, and color of the image, and then add a descriptive text label, namely, the image label, to the image in an automatic annotation manner. The image label is configured to represent a task type corresponding to the input image, such as an image classification task or an image description task.

Then, the description prompt text is inputted into the image description model, and a screening label is obtained based on the image description rule. The screening label is configured to represent a task type corresponding to the image description rule represented by the description prompt text. In other words, the task type of an input image that needs to be screened may be determined based on the description prompt text. For example, whether the input image is image classification or image description may be determined based on the description prompt text. If the input image is image classification, a label for image classification may be obtained through the description prompt text. For example, if the description prompt text is a question, and may be "whether the image is a two-dimensional code", the label may be a two-dimensional code classification task, namely, the screening label.

Then, each input image is screened based on the screening label and the image label, to obtain an input image associated with the image description rule, to obtain the target image. In other words, an input image with an image label the same as that of the screening label is reserved, so that the input image corresponding to the image description rule of the screening label can be obtained and configured as the target image.

Finally, image description is performed on the target image through the image description model, to obtain a first image description text that conforms to the image description rule. In other words, images corresponding to the description prompt text can be pre-screened, to reserve an image that meets the requirement and to screen out the input images unassociated with the screening label. In this way, the image can be screened before image description is performed on the input image through the image description model, so as to better perform image description, avoiding identification of the input images of a task type different from that of the image description rule, thereby improving accuracy of image description on the input image.

To facilitate image selection, further, in some embodiments, the target image includes at least two target images, and the performing image description on the target image through the image description model, to obtain the first image description text that conforms to the image description rule includes:
obtaining image labels of at least two target images;
dividing the at least two target images based on the image labels, to obtain target images with the same label; and
performing image description on the target images with the same label through the image description model, to obtain the first image description text that conforms to the image description rule.

In other words, when the first image description text is obtained based on the target image, an image label of the target image is first obtained, and is used as a classification image label. Classification is performed based on the classification image label, to obtain classified images. For example, classification image labels of different target images may be two-dimensional codes, disturbing content, ostentatious display of wealth, historical costumes, and the like. The target images may be classified through these labels, namely, target images including two-dimensional code labels are classified together, and target images including disturbing content labels are classified together, to obtain the classified images.

Finally, image description is performed on the classified images through the image description model, to obtain the first image description text of the target image that conforms to the image description rule, so that the image description model can perform image description on the target image, and can better classify and describe the target image. In other words, the image description may be first performed on target images with the same label, to improve order of the image description, thereby improving quality of the image description.

Further, in some embodiments, the performing image description on the target image through the image description model, to obtain the first image description text that conforms to the image description rule includes:
obtaining text labels of a plurality of description prompt texts;
determining, from the text labels of the plurality of description prompt texts, a text label that matches an image label corresponding to the target image, to obtain a target label;
obtaining a description prompt text corresponding to the target label from the plurality of description prompt texts, to obtain a target prompt text; and
performing image description on the target image through the image description model, to obtain the first image description text that conforms to the image description rule corresponding to the target prompt text.

Specifically, during image description, different description prompt texts need to be selected for different image tasks. In other words, different image description rules correspond to different description prompt text, and a text label for the description prompt text exists. For example, if the image description rule is generating the image description text, the corresponding description prompt text label may be description. If the image description rule is image classification, the corresponding description prompt text label may be classification. Certainly, an actual text label may be set based on an actual situation.

While the image label can classify the target image, task classification can be performed on the target image, that is, whether the target image performs an image description task or an image classification task, or another task is determined. For example, two-dimensional code labels and labels indicating disturbing content and ostentatious displays of wealth may be selected as an image classification task, and historical costume labels may be selected as an image description task. Therefore, a text label of each description prompt text may be obtained, and then the text label of each description prompt text is matched and corresponded with the image label of each target image, to determine the task that the target image needs to perform.

Therefore, after the target label is obtained, the description prompt text corresponding to the target label may be obtained from the description prompt texts, and is used as the target prompt text. Finally, the image description is performed on the classified image through the image description model, to obtain the first image description text that conforms to the image description rule corresponding to the target prompt text. Further, for different types of images, different description prompt texts may be selected for image description, thereby improving the accuracy of the image description.

Further, in some embodiments, the same target label corresponds to at least two description prompt texts, and the obtaining a description prompt text corresponding to the target label, to obtain a target prompt text includes:
obtaining a text call rate of the plurality of description prompt texts corresponding to the target label within a preset time period; and
using, as the target prompt text, the description prompt text having a maximum text call rate.

When the target prompt text is obtained, a plurality of description prompt texts for a same target label may exist, i.e. different image description rules are set. For example, for a task of image description, a situation in which the image description rule only describes the people in the image exists, a situation in which both the people and the scenery are described also exists, and a situation in which only the scenery is described may even exist. Therefore, the image description rule needs to be selected, namely, the description prompt text is selected.

A selection manner may be obtaining a text call rate of each description prompt text corresponding to the target label within a preset time period, namely, a quantity of use times of the description prompt text corresponding to the target label within one time period, and using a description prompt text having a maximum quantity of use times, namely, a maximum text call rate, as the target prompt text, so as to provide an image description rule for the image description model based on the target prompt text, to perform an image description task, thereby obtaining image description text that meets a requirement.

Selection of the description prompt text through the text call rate may have a relatively large selection error. Therefore, selection may also be performed in another manner. Further, in some embodiments, the same target label corresponds to at least two description prompt texts, and the obtaining a description prompt text corresponding to the target label, to obtain a target prompt text further includes:
determining whether the image labels of the at least two target images include any prohibited label;
obtaining, if the prohibited label exists, target labels corresponding to the image labels including the prohibited label, to obtain target screening labels;
obtaining description prompt texts corresponding to the target screening labels, to obtain screening prompt texts; and
obtaining, based on the screening prompt texts, a description prompt text remaining in the at least two description prompt texts corresponding to the target labels, to obtain the target prompt text.

Specifically, whether the image label of the target image includes the prohibited label is first determined. The prohibited label may be preset based on an actual situation. For example, the prohibited label may be a luxury vehicle or a sensitive area. These labels may be obtained through image identification.

If the prohibited label exists, the target label corresponding to the image label for which the prohibited label exists is obtained and used as the target screening label. For example, if the prohibited label exists, the image description rule that only describes the people in the image is selected, and the image description rule that describes the scenery exists. In other words, the description prompt text that describes the scenery is the screening prompt text, and the description prompt text that does not describe the scenery is the target prompt text. That is to say, after the screening prompt text is excluded from the description prompt texts, the remaining description prompt text is the target prompt text.

Therefore, in the foregoing manner, the description prompt text can be better selected, so that the obtained description prompt text can better meet the requirement of the target description, the obtained image description text is more accurate, and the number of times of manual modification can be reduced as much as possible, thereby reducing workload of staff and improving operating efficiency in the image annotation process.

FIG. 6 is a schematic diagram of a comparison of efficiency between manual image description and image description through an image description model according to an embodiment of this application. FIG. 6 includes tasks of image classification and image description, and presents an improvement index for an annotation task during image description performed by an image description model and an annotation process. In a scenario of a task of image classification, for a label A, a label B, and a label C, after screening is performed through an MLLM, a concentration of annotated data greatly increases, reaching 155%, 247%, and 150% respectively, and a unit annotation cost is also reduced by 25%, 60%, and 34% respectively.

In an image description task, a first image description text is generated through the image description model, and then the first image description text is manually modified based on the first image description text. A quantity of annotations per person day increases from 170 to 300. A consistency rate of a text generated through the image description model and a final text manually reaches 72%. Final accuracy does not significantly change, and a unit annotation cost is reduced from 1 to 0.567, which saves a lot of annotation costs for a service.

It can be learned from the above that in this embodiment, the following operations may be performed: obtaining an input image; obtaining an image description model and a description prompt text, the description prompt text being configured for providing an image description rule for performing image description by the image description model; and inputting the description prompt text and the input image into the image description model, and performing image description on the input image based on the description prompt text through the image description model, to obtain a first image description text that conforms to an image description rule, the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule. In this application, the description prompt text that meets the description requirement is obtained through the sample image description text and the predicted image description text, and then the image description model may generate, based on the description prompt text, the first image description text that conforms to the image description rule without consuming network resources to identify information such as a candidate box and a classification of the image, and the first image description text can be directly generated, thereby avoiding a waste of the network resources and saving the network resources. In addition, the first image description text of the input image that conforms to the image description rule can be rapidly generated by using the description prompt text through the image description model. Then, the input image may be annotated through the first image description text, which can reduce complexity in an image annotating process, thereby improving image annotating efficiency.

According to the method described in the foregoing embodiment, a detailed description is further provided below by using an example in which the image description apparatus is specifically integrated in a terminal.

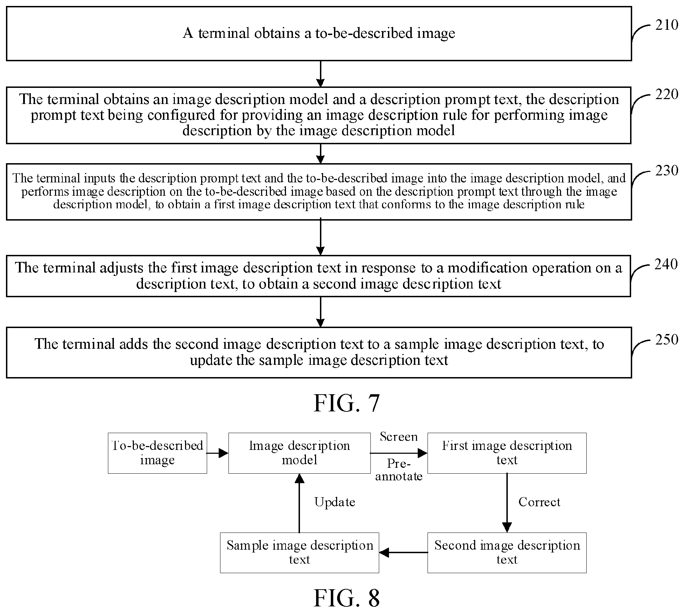

An embodiment of this application provides an image description method. As shown in FIG. 7, the image description method may include the following specific operations.

210: A terminal obtains an input image.

A manner in which the terminal obtains the input image may be that the input image is obtained by another terminal device to the image description system in a wired and/or wireless manner, or certainly, several images may be prestored in the image description system. A manner of setting a time for an image enables the system to automatically extract the corresponding input image when the set time arrives. Certainly, the manner may alternatively be another manner, which is not limited in this embodiment.

220. The terminal obtains an image description model and a description prompt text, the description prompt text being configured for providing an image description rule for performing image description by the image description model.

The description prompt text is obtained by correcting an initial prompt text corresponding to the image description rule based on a first text difference between a sample image description text and a predicted image description text, the sample image description text is obtained based on a sample image and the image description rule, the predicted image description text is obtained by the image description model performing image description on the sample image, and the initial prompt text is initialized based on the image description rule.

230: The terminal inputs the description prompt text and the input image into the image description model, and performs image description on the input image based on the description prompt text through the image description model, to obtain a first image description text that conforms to the image description rule.

240: The terminal adjusts the first image description text in response to a modification operation on a description text, to obtain a second image description text.

250: The terminal adds the second image description text to a sample image description text, to update the sample image description text.

FIG. 8 is a schematic data flowchart of image description according to an embodiment of this application. After a terminal obtains an input image, an image description model first performs classification and screening on the input image, so as to obtain a classified image. Then, the terminal pre-annotates, based on the corresponding description prompt text, the classified image through the image description model, namely, obtains a first image description text. The first image description text may then be corrected to obtain an accurate second image description text.

Then, the terminal adds the second image description text to the sample image description text, and updates the sample image description text, to implement update and iteration of the image description model, so that the image description model can perform image description more accurately, thereby improving accuracy of the image description.

It can be learned from the above that in this embodiment, the following operations may be performed: obtaining, by the terminal, an input image; obtaining an image description model and a description prompt text, the description prompt text being configured for providing an image description rule for performing image description by the image description model; and inputting the description prompt text and the input image into the image description model, and performing image description on the input image through the image description model based on the description prompt text, to obtain a first image description text that conforms to an image description rule the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule. In this application, the description prompt text that meets the description requirement is obtained through the sample image description text and the predicted image description text, and then the image description model may generate, based on the description prompt text, the first image description text that conforms to the image description rule without consuming network resources to identify information such as a candidate box and a classification of the image, and the first image description text can be directly generated, thereby avoiding a waste of the network resources and saving the network resources. In addition, the first image description text of the input image that conforms to the image description rule can be rapidly generated by using the description prompt text through the image description model. Then, the input image may be annotated through the first image description text, which can reduce complexity in an image annotating process, thereby improving image annotating efficiency.

In a specific embodiment, an image description method is provided. The image description method may be performed by a computer device, and specifically includes the following operations.
1. Perform initialization based on a preset image description rule, to obtain the initial prompt text; input the initial prompt text and the sample image into the image description model; and perform image description on the sample image based on the initial prompt text through the image description model, to obtain a predicted image description text.
2. Obtain a sample image description text based on the image description rule and the sample image; obtain a first text difference based on the sample image description text and the predicted image description text; and correct the initial prompt text based on the first text difference, to obtain a description prompt text.
3. Obtain an input image, and obtain an image description model and a description prompt text, the description prompt text being configured for providing an image description rule for performing image description by the image description model.
4. Obtain an instruction prompt text based on the sample image description text, the instruction prompt text including an image description instruction and a sample description text corresponding to the image description instruction; and guide, based on the image description instruction, the image description model to perform image description on a sample image, to obtain a predicted description text.
5. Obtain a second text difference based on the predicted description text and the sample description text; and perform parameter optimization and iteration on the image description model based on the second text difference and the instruction prompt text, until the second text difference meets a preset convergence condition.
6. Input the description prompt text and the input image into the image description model if the second text difference meets a preset convergence condition, and perform feature extraction on the at least two t input images through the image description model, to obtain image labels of the at least two input images.
7. Input the description prompt text into the image description model, and obtain a screening label based on the image description rule; and screen the at least two input images based on the screening label and the image labels, to obtain an input image associated with the image description rule, and a target image.
8. Perform image description on the target image through the image description model, to obtain the first image description text that conforms to the image description rule.
9. Display a description text adjustment interface, the description text adjustment interface including an image text display area and a text adjustment area, the image text display area being configured for displaying the first image description text; and adjust the first image description text in the text adjustment area in response to a modification operation on a description text, to obtain a second image description text.
10. Obtain a comparison text of the first image description text and the second image description text; and update the second image description text to the image text display area to replace the first image description text if the comparison text meets a preset text modification completion condition, and add the second image description text to the sample image description text, to update the sample image description text.

In other words, the description prompt text that meets the description requirement is obtained through the sample image description text and the predicted image description text, and then the image description model may generate, based on the description prompt text, the first image description text that conforms to the image description rule without consuming network resources to identify information such as a candidate box and a classification of the image, and the first image description text can be directly generated, thereby avoiding a waste of the network resources and saving the network resources. In addition, the first image description text of the input image that conforms to the image description rule can be rapidly generated by using the description prompt text through the image description model. Then, the input image may be annotated through the first image description text, which can reduce complexity in an image annotating process, thereby improving image annotating efficiency.

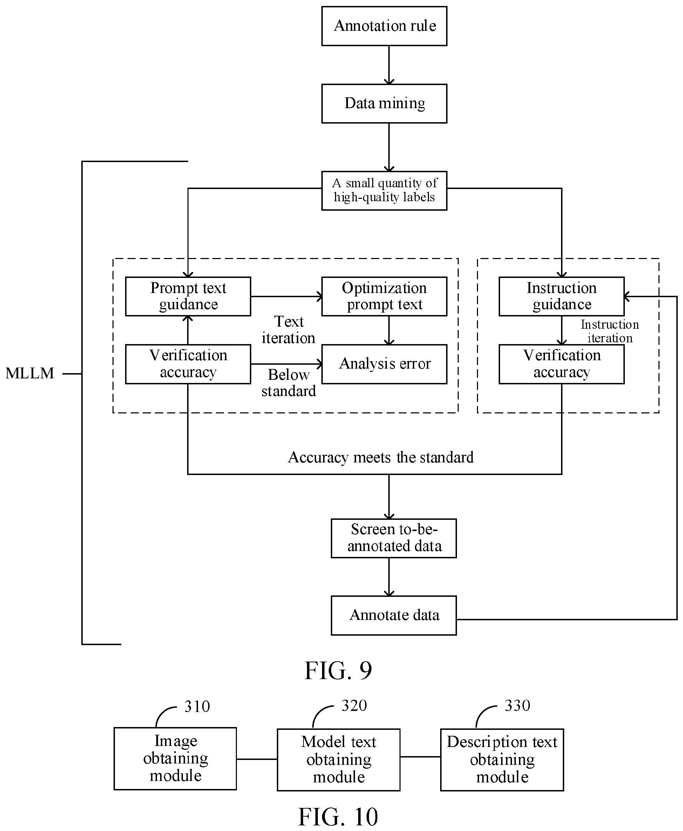

In s specific embodiment, as shown in FIG. 9, a schematic flowchart of establishing an image description model is provided. The image description model is a multi-modal language model, for example, an LLM. Specifically, an annotation rule is obtained. The annotation rule is an image description rule, and may be, for example, the description rules defined in FIG. 2b and FIG. 2c. Then, data mining is performed to obtain sample data trained by the model. Next, high-quality sample data manually annotated by an expert may be obtained. The sample data includes a sample image and a sample image description text. Then, the sample data is configured for performing prompt text iteration. In other words, the sample data is configured for training a multi-modal LLM model. A difference between a model prediction result and a sample image description text annotated by an expert is determined, and model prediction accuracy is calculated. When the model prediction accuracy does not reach a standard, an incorrect sample is analyzed, the prompt text is optimized and corrected, and repeated iteration is continuously performed, until preset accuracy is reached, to obtain a multimodal language model that is completely trained. Then, instruction text iteration may be performed on the model on which training is completed, to further improve prediction accuracy of the model. In an instruction text iteration process, VisualGLM-6B may be used as a base model. A model architecture of the VisualGLM-6B mainly includes three modules: ViT, QFormer, and ChatGLM-6B. During training, almost all parameters of the ViT and the ChatGLM are frozen, to prevent catastrophic forgetting. During iteration, LoRAs of the QFormer and the ChatGLM are fine-tuned for learning. Loss used during training includes two parts: an autoregressive loss and a contrastive loss, and training data uses a sample corresponding to an annotation task. Finally, to-be-annotated data may be obtained through the trained multi-modal language model, and then to-be-annotated samples are screened, to filter out invalid negative samples in the to-be-annotated samples. Then, prediction is performed on the to-be-annotated sample through the trained model, to generate an annotation description text. The generated annotation description text may be further adjusted, to obtain an annotation text corresponding to a final sample. In other words, the trained multi-modal language model is annotated and generated, thereby improving efficiency and accuracy of generating an annotation text.

In a specific embodiment, the image description method is applied to an annotation scenario of image classification. Specifically, when a server needs to train an image classification model, images whose categories are annotated need to be used. In this case, the server may obtain a to-be-annotated image and a description prompt text. The description prompt text is configured for a classification description rule. For example, the description prompt text may be "does a human face exists in the image". The server inputs the to-be-annotated image and the image description text into the image description model, and performs image description on the to-be-annotated image based on the image description prompt text through the image description model, to obtain an image description text. The image description text may be "a human face exists in the image". In this case, the server may generate, based on the image description text, a label indicating whether a human face in the to-be-annotated image, for example, "the to-be-annotated image is a label indicating that the human face exists in the image". The server may generate labels indicating whether a large quantity of human faces corresponding to the to-be-annotated image exist through the image description model. Then, an image classification model that identifies whether the human face exists may be trained through a large quantity of annotated images and a label indicating whether the human face exists, to obtain the image classification model. Whether the human face exists in the image may be identified through the image classification model. In other words, the annotation text corresponding to the to-be-annotated image may can directly generated through the image description model, thereby improving efficiency and accuracy of generating the annotation text.

To better implement the foregoing method, an embodiment of this application further provides an image description apparatus. As shown in FIG. 10, the image description apparatus may include an image obtaining module 310, a model text obtaining module 320, and a description text obtaining module 330.

The image obtaining module 310 is configured to obtain an input image.

A model text obtaining module 320 is configured to obtain an image description model and a description prompt text, the description prompt text being configured for providing an image description rule for performing image description by the image description model.

The description prompt text is obtained by correcting an initial prompt text corresponding to the image description rule based on a first text difference between a sample image description text and a predicted image description text, the sample image description text is obtained based on a sample image and the image description rule, the predicted image description text is obtained by the image description model performing image description on the sample image, and the initial prompt text is initialized based on the image description rule.

The description text obtaining module 330 is configured to input the description prompt text and the input image into the image description model, and perform image description on the input image based on the description prompt text through the image description model, to obtain a first image description text that conforms to the image description rule.

It can be learned from the above that in this embodiment, the image obtaining module is configured to obtain the input image. Then, the model text obtaining module is configured to the image description model and the description prompt text, the description prompt text being configured for providing an image description rule for performing image description by the image description model. Next, the description text obtaining module is configured to input the description prompt text and the input image into the image description model, and perform image description on the input image based on the description prompt text through the image description model, to obtain a first image description text that conforms to an image description rule, the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule. In this application, the description prompt text that meets the description requirement is obtained through the sample image description text and the predicted image description text, and then the image description model may generate, based on the description prompt text, the first image description text that conforms to the image description rule without consuming network resources to identify information such as a candidate box and a classification of the image, and the first image description text can be directly generated, thereby avoiding a waste of the network resources and saving the network resources. In addition, the first image description text of the input image that conforms to the image description rule can be rapidly generated by using the description prompt text through the image description model. Then, the input image may be annotated through the first image description text, which can reduce complexity in an image annotating process, thereby improving image annotating efficiency.

An embodiment of this application further provides an electronic device. FIG. 10 is a schematic diagram of a structure of an electronic device according to an embodiment of this application. The electronic device may be a terminal or a server. Specifically,
the electronic device may include components such as a processor 101 of one or more processing cores, a memory 102 of one or more computer-readable storage media, a power supply 103, and an input unit 104. A person skilled in the art may understand that a structure of the electronic device shown in FIG. 10 does not constitute a limitation on the electronic device, and the electronic device may include more or fewer components than those shown in the figure, or some merged components, or different component arrangements.

The processor 101 is a control center of the electronic device, is connected to all parts of the entire electronic device through various interfaces and lines, and implements various functions of the electronic device and performs data processing by running or executing a software program and/or a module stored in the memory 102 and calling data stored in the memory 102. The processor 101 may include one or more processing cores. Preferably, the processor 101 may integrate an application processor and a modem processor. The application processor mainly processes an operating system, a user interface, an application program, and the like. The modem processor mainly processes wireless communication. The foregoing modem processor may not be integrated into the processor 101.

The memory 102 may be configured to store a software program and a module. The processor 101 executes various function applications and performs data processing by running the software program and the module stored in the memory 102. The memory 102 may mainly include a program storage area and a data storage area. The program storage area may have an operating system, an application program required by at least one function (such as a sound playback function and an image display function), and the like stored therein. The data storage area may have data and the like created based on use of the electronic device stored therein. In addition, the memory 102 may include a high-speed random access memory, and may further include a non-volatile memory, such as at least one magnetic disk storage device, a flash memory, or another volatile solid-state storage device. Correspondingly, the memory 102 may further include a memory controller, to provide access to the memory 102 for the processor 101.

The electronic device further includes a power supply 103 that supplies power to various components. Preferably, the power supply 103 may be logically connected to the processor 101 through a power management system, so that functions such as charging, discharging, and power management may be achieved through the power management system. The power supply 103 may further include any component such as one or more direct current or alternating current power supplies, a recharging system, a power failure detection circuit, a power converter or inverter, a power status indicator, and the like.

The electronic device may further include an input unit 104. The input unit 104 may be configured to receive information about an inputted number or character, and generate inputs of a keyboard, a mouse, a joystick, an optical or trackball signal that are related to user settings and function control.

Although not shown, the electronic device may further include a display unit and the like. Details are not described herein again. Specifically, in this embodiment, the processor 101 in the electronic device loads executable files corresponding to processes of the one or more application programs to the memory 102 based on the following instructions, and the processor 101 runs the application programs stored in the memory 102, to implement the following functions:
obtaining an input image; obtaining an image description model and a description prompt text, the description prompt text being configured for providing an image description rule for performing image description by the image description model; and inputting the description prompt text and the input image into the image description model, and performing image description on the input image based on the description prompt text through the image description model, to obtain a first image description text that conforms to an image description rule, the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule.

For specific implementations of the above operations, reference is made to the foregoing embodiments. Details are not described herein again.

It can be learned from the above that in this embodiment, the following operations may be performed: obtaining an input image; obtaining an image description model and a description prompt text, the description prompt text being configured for providing an image description rule for performing image description by the image description model; and inputting the description prompt text and the input image into the image description model, and performing image description on the input image based on the description prompt text through the image description model, to obtain a first image description text that conforms to an image description rule, the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule. In this application, the description prompt text that meets the description requirement is obtained through the sample image description text and the predicted image description text, and then the image description model may generate, based on the description prompt text, the first image description text that conforms to the image description rule without consuming network resources to identify information such as a candidate box and a classification of the image, and the first image description text can be directly generated, thereby avoiding a waste of the network resources and saving the network resources. In addition, the first image description text of the input image that conforms to the image description rule can be rapidly generated by using the description prompt text through the image description model. Then, the input image may be annotated through the first image description text, which can reduce complexity in an image annotating process, thereby improving image annotating efficiency.

A person skilled in the art may understand that, all or some operations of various methods in the foregoing embodiments may be implemented through instructions, or implemented through instructions controlling relevant hardware, and the instructions may be stored in a computer-readable storage medium and loaded and executed by a processor.

For this purpose, an embodiment of this application provides a computer-readable storage medium, having a plurality of instructions stored therein, and the instructions being loaded by a processor, to perform operations in any one of the image description methods provided in the embodiment of this application. For example, the instructions may perform the following operations:
displaying a parameterized image annotation interface, the image annotation interface including a parameter configuration area, the parameter configuration area including a modular model component, the model component including a preset configuration and a modifiable parameter, and the modifiable parameter being configured for modifying the component code of the model component; obtaining, in response to a configuration operation on the model component, the model component corresponding to the component code based on the modifiable parameter, and using the model component as a first configuration model component; and building a first target model in a preset model building area based on the first configuration model component.

For specific implementations of the above operations, reference is made to the foregoing embodiments. Details are not described herein again.

The computer-readable storage medium may include a read-only memory (ROM), a random access memory (RAM), a magnetic disk, an optical disc, or the like.

Since the instructions stored in the computer-readable storage medium may perform operations in any one of the image description methods provided in all embodiments of this application, the instructions can implement beneficial effects that can be achieved by any one of the image description methods provided in all embodiments of this application. For details, reference is made to the foregoing embodiments. Details are not described herein again.

According to an aspect of this application, a computer program product or a computer program is provided, the computer program product or the computer program including a computer instruction, the computer instruction being stored in a computer-readable storage medium. A processor of a computer device reads the computer instructions from the computer-readable storage medium. The processor executes the computer instructions, to cause the computer device to implement the method provided in the exemplary implementations of the above content sorting aspect.

The image description method and the related device provided in all embodiments of this application are described above in detail. Although the principles and implementations of this application are described through specific examples in this specification, the descriptions of the foregoing embodiments are merely intended to help understand the method and the core idea of the method of this application. Meanwhile, a person skilled in the art may make modifications to the specific implementations and an application range according to the idea of this application. In conclusion, the content of this specification is not to be construed as a limitation on this application.

## Claims

1. An image description method, comprising:
obtaining input image;
obtaining an image description model and a description prompt text, the description prompt text being configured for providing an image description rule for performing image description by the image description model;
inputting the description prompt text and the input image into the image description model, and performing image description on the input image based on the description prompt text through the image description model, to obtain a first image description text that conforms to the image description rule,
the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule.

2. The image description method according to claim 1, wherein before the obtaining a description prompt text, the method further comprises:
performing initialization based on a preset image description rule, to obtain an initial prompt text;
inputting the initial prompt text and the sample image into the image description model, and performing image description on the sample image based on the initial prompt text through the image description model, to obtain a predicted image description text;
obtaining a sample image description text based on the image description rule and the sample image;
obtaining a first text difference based on the sample image description text and the predicted image description text; and
correcting the initial prompt text based on the first text difference, to obtain a description prompt text.

3. The image description method according to any one of claims 1 to 2, wherein after the first image description text is obtained, the method further comprises:
displaying a description text adjustment interface, the description text adjustment interface comprising an image text display area and a text adjustment area, the image text display area being configured for displaying the first image description text;
adjusting the first image description text in the text adjustment area in response to a modification operation on a description text, to obtain a second image description text; and
updating the second image description text to the image text display area to replace the first image description text.

4. The image description method according to any one of claims 1 to 3, wherein after the updating the second image description text to the image text display area to replace the first image description text, the method further comprises:
adding the second image description text to the sample image description text, to update the sample image description text.

5. The image description method according to any one of claims 1 to 4, wherein before the updating the second image description text to the image text display area to replace the first image description text, the method further comprises:
obtaining a comparison text of the first image description text and the second image description text; and
performing the operation of updating the second image description text to the image text display area to replace the first image description text if the comparison text meets a preset text modification completion condition.

6. The image description method according to any one of claims 1 to 5, wherein before the inputting the description prompt text and the input image into the image description model, and performing image description on the input image based on the description prompt text through the image description model, to obtain a first image description text that conforms to the image description rule, the method further comprises:
obtaining an instruction prompt text based on the sample image description text, the instruction prompt text comprising an image description instruction and a sample description text corresponding to the image description instruction;
guiding, based on the image description instruction, the image description model to perform image description on a sample image, to obtain a predicted description text;
obtaining a second text difference based on the predicted description text and the sample description text;
performing parameter optimization and iteration on the image description model based on the second text difference and the instruction prompt text, until the second text difference meets a preset convergence condition; and
performing, if the second text difference meets the preset convergence condition, the operation of inputting the description prompt text into the image description model, and performing image description on the input image through the image description model, to obtain a first image description text that conforms to the image description rule.

7. The image description method according to any one of claims 1 to 6, wherein the input image comprises at least two input images, and the inputting the description prompt text and the input image into the image description model, and performing image description on the input image based on the description prompt text through the image description model, to obtain a first image description text that conforms to the image description rule comprises:
performing feature extraction on the at least two input images through the image description model, to obtain image labels of the at least two input images;
inputting the description prompt text into the image description model, and obtaining a screening label based on the image description rule;
screening the at least two input images based on the screening label and the image labels, to obtain an input image associated with the image description rule, and a target image; and
performing image description on the target image through the image description model, to obtain the first image description text that conforms to the image description rule.

8. The image description method according to any one of claims 1 to 7, wherein the target image comprises at least two target images, and the performing image description on the target image through the image description model, to obtain the first image description text that conforms to the image description rule comprises:
obtaining image labels of the at least two target images;
dividing the at least two target images based on the image labels, to obtain target images with the same label; and
performing image description on the target images with the same label through the image description model, to obtain the first image description text that conforms to the image description rule.

9. The image description method according to any one of claims 1 to 8, wherein the performing image description on the target images with the same label through the image description model, to obtain the first image description text that conforms to the image description rule comprises:
obtaining text labels of a plurality of description prompt texts;
determining, from the text labels of the plurality of description prompt texts, a text label that matches an image label corresponding to the target image, to obtain a target label;
obtaining a description prompt text corresponding to the target label from the plurality of description prompt texts, to obtain a target prompt text; and
performing image description on the target images with the same label through the image description model, to obtain the first image description text that conforms to the image description rule corresponding to the target prompt text.

10. The image description method according to any one of claims 1 to 9, wherein the same target label corresponds to at least two description prompt texts, and the obtaining a description prompt text corresponding to the target label, to obtain a target prompt text comprises:
obtaining a text call rate of the plurality of description prompt texts corresponding to the target label within a preset time period; and
using, as the target prompt text, the description prompt text having a maximum text call rate.

11. The image description method according to any one of claims 1 to 10, wherein the same target label corresponds to at least two description prompt texts, and the obtaining a description prompt text corresponding to the target label, to obtain a target prompt text further comprises:
determining whether the image labels of the at least two target images comprise any prohibited label;
obtaining, if the prohibited label exists, target labels corresponding to the image labels comprising the prohibited label, to obtain target screening labels;
obtaining description prompt texts corresponding to the target screening labels, to obtain screening prompt texts; and
obtaining, based on the screening prompt texts, a description prompt text remaining in the at least two description prompt texts corresponding to the target labels, to obtain the target prompt text.

12. An image description apparatus, comprising:
an image obtaining module, configured to obtain an input image;
a model text obtaining module, configured to obtain an image description model and a description prompt text, the description prompt text being configured for providing an image description rule for performing image description by the image description model;
a description text obtaining module, configured to input the description prompt text and the input image into the image description model, and perform image description on the input image based on the description prompt text through the image description model, to obtain a first image description text that conforms to the image description rule,
the description prompt text being obtained by correcting an initial prompt text corresponding to the image description rule based on a first text difference between a sample image description text and a predicted image description text, the sample image description text being obtained based on a sample image and the image description rule, the predicted image description text being obtained by the image description model performing image description on the sample image based on the initial prompt text, and the initial prompt text being initialized based on the image description rule.

13. An electronic device, comprising a processor and a memory, the memory having an application program stored therein, and the processor being configured to run the application program in the memory to perform the operations of the image description method according to any one of claims 1 to 11.

14. A computer-readable storage medium, having a plurality of instructions stored therein, the instructions being adapted to be loaded by a processor to perform the operations of the image description method according to any one of claims 1 to 11.

15. A computer program product, comprising a computer program or instruction, the computer program or instruction, when executed by a processor, implementing the operations of the image description method according to any one of claims 1 to 11.
